Europäisches Patentamt

(19) European Patent Office

Office européen des brevets

(11) Numéro de publication: **0 285 501 B1**

(12) **FASCICULE DE BREVET EUROPEEN**

(45) Date de publication du fascicule du brevet:
14.11.90

(21) Numéro de dépôt: **88400694.1**

(22) Date de dépôt: **23.03.88**

(51) Int. Cl.⁵: **G01V 1/133**, G01V 1/137

(54) Dispositif perfectionné pour produire dans l'eau des ondes acoustiques.

(30) Priorité: **24.03.87 FR 8704124**

(43) Date de publication de la demande:
**05.10.88 Bulletin 88/40**

(45) Mention de la délivrance du brevet:
**14.11.90 Bulletin 90/46**

(84) Etats contractants désignés:
**BE DE GB IT NL**

(56) Documents cités:
**FR-A- 2 481 382**
**FR-A- 2 546 634**
**FR-A- 2 558 267**
**FR-A- 2 558 600**

(73) Titulaire: **INSTITUT FRANCAIS DU PETROLE, 4, Avenue de Bois-Préau, F-92502 Rueil-Malmaison(FR)**

(72) Inventeur: **Dessapt, Jean-Paul, 25, rue des Ibis, F-78650 Beynes(FR)**

## Description

La présente invention concerne un dispositif perfectionné du type canon à eau pour produire dans l'eau des ondes acoustiques.

On connaît un dispositif pour engendrer dans l'eau des ondes acoustiques, qui comporte un corps tubulaire ouvert sur le milieu extérieur à l'une de ses extrémités, à l'intérieur duquel peut coulisser un piston principal. Celui-ci est relié à un piston auxiliaire pour former un premier équipage mobile. Un système permet de manoeuvrer le premier équipage mobile. Il est constitué d'un second équipage mobile comportant un piston secondaire et un piston annulaire adaptés à coulisser dans le corps et réunis par une tige creuse dans laquelle le piston auxiliaire peut coulisser, l'élément mobile étant pourvu d'une ouverture centrale formant siège pour le piston principal, et de moyens pour engendrer des fluides à une première pression et une seconde pression plus élevée que la première, ces moyens coopérant avec un clapet soulevé par l'application du piston principal contre ledit siège. La pression dans l'espace intermédiaire entre le piston principal et le piston annulaire est variable. Le relèvement du clapet met cet espace à une faible pression. Sa fermeture met le même espace à ladite première pression.

Le dispositif comporte en outre une vanne de distribution pourvue d'une partie mobile (tiroir) et des canalisations pour appliquer sur une face du piston secondaire un fluide à la seconde pression ou à une basse pression, selon que la partie mobile est dans une première ou une seconde position. La partie mobile est déplaçable à l'intérieur de la vanne sous l'action de deux pressions antagonistes, l'une d'entre elles étant constante et appliquée sur une première face de la partie mobile, l'autre étant égale à la pression variable qui règne dans l'espace intermédiaire entre le piston principal et le piston annulaire, et appliquée sur une seconde face de la partie mobile.

Les moyens pour engendrer les fluides comportent par exemple un générateur d'air comprimé. Le générateur d'air comprimé communique en permanence avec la partie du corps situé entre le piston secondaire et le piston annulaire et avec l'intérieur de la tige creuse qui les relie, quelle que soit la position de celui-ci. Un tel dispositif est décrit par exemple dans la demande de brevet français publiée n, 2.558.600.

L'application de la haute pression a pour effet de décoller l'un de l'autre le piston annulaire et le piston principal. Toute la surface de celui-ci est exposée à une pression très élevée. Le premier équipage mobile est donc propulsé en avant et il chasse brusquement à l'extérieur l'eau contenue dans le corps ce qui provoque une implosion génératrice d'ondes sismiques.

L'intervention du clapet permettant de modifier, au moment des contacts entre les deux équipages mobiles, les pressions agissant sur la partie mobile de la vanne de distribution et ainsi de changer les pressions appliquées au piston secondaire, et le choix des sections des différents éléments soumis aux pressions, a pour conséquence de rendre le cycle de réarmement complètement automatique, la phase de réarmement étant engagée dès le déclenchement du dispositif.

Le mouvement de recul du piston principal vers sa position de réarmement ne peut s'amorcer que si le piston annulaire est venu, en s'appuyant contre lui, relever le clapet et ainsi permettre le déplacement du tiroir de la vanne.

On a observé à l'usage d'un tel dispositif, en raison notamment du vieillissement des joints d'étanchéité autour des pistons, que le second équipage coulisse moins facilement dans le corps et que son mouvement de rapprochement vers le piston principal n'est plus aussi franc. Le freinage qui peut se produire dans la phase finale du rapprochement peut être suffisant pour que le clapet soit en partie soulevé alors que le piston principal et le piston annulaire ne sont pas encore bien appliqués l'un contre l'autre. La chute de la pression entre les deux pistons consécutive au relèvement partiel du clapet peut être suffisante pour que la vanne de distribution soit actionnée. Les deux équipages mobiles reculent alors ensemble vers le fond du corps sans pour autant être bien en contact l'un avec l'autre. L'instant de réarmement du dispositif se trouve retardé. Les inconvénients d'un retard au réarmement sont plus particulièrement marqués lorsqu'on réalise un système d'émission sismique multi-sources où plusieurs dispositifs d'émission du même type sont remorqués en immersion et déclenchés suivant une séquence de "tirs" particulière.

Le mauvais réarmement de l'un deux peut dans ce cas avoir une incidence sur la réponse globale du sytème d'émission.

On a trouvé aussi que le défaut dans l'application du second équipage mobile contre le piston principal peut même rendre le dispositif inopérant. Cela tient à ce que la pression régnant alors dans l'espace intermédiaire peut fluctuer suffisamment pour entraîner un nouveau déplacement du premier équipage mobile. La dépression qui se crée dans la chambre entre le piston auxiliaire (solidaire du piston principal) et le piston secondaire (faisant partie du second équipage mobile) fait pénétrer de l'eau à l'intérieur. Si le mouvement alternatif de pompage se reproduit, il peut y avoir suffisamment d'eau dans cette chambre pour empêcher les deux équipages mobiles de s'appliquer l'un contre l'autre et le dispositif cesse de fonctionner, comme on le verra plus en détail à la fin de la description qui va suivre.

Le dispositif selon l'invention permet d'éviter les inconvénients ci-dessus mentionnés.

Il comporte un corps tubulaire ouvert sur le milieu extérieur à l'une de ses extrémités, un piston principal, coulissant dans le corps, un piston auxiliaire relié au piston principal et formant avec lui un premier équipage mobile, un système de manoeuvre du premier équipage mobile constitué d'un second équipage mobile comportant un piston secondaire et un piston annulaire adaptés à coulisser dans le corps et réunis par une tige creuse dans laquelle le piston auxiliaire peut coulisser, le piston annulaire étant pourvu d'une ouverture centrale formant siège pour le piston principal et des moyens pour engendrer des fluides à une première pression et à une pression plus élevée que la première, ces moyens coopérant avec un détecteur de butée actionné par l'application du piston principal contre le piston annulaire. Il comporte aussi une vanne de distribution à tiroir dont la partie mobile est déplaçable dans une cavité sous les effets antagonistes d'un fluide à la seconde pression appliqué en permanence et d'une pression variable, laquelle est susceptible de prendre deux valeurs différentes selon la disposition du détecteur de butée, ce distributeur étant adapté à appliquer par intermittence à une face du piston secondaire, un fluide à la seconde pression.

Il est caractérisé en ce qu'il comporte un élément de contrôle calibré pour appliquer à la partie mobile de la vanne de distribution, soit ladite pression variable régnant dans l'espace intermédiaire entre le piston principal et le piston annulaire lorsqu'elle est supérieure à une pression-seuil, soit une pression faible, provoquant le déplacement de la partie mobile de ladite vanne.

L'élément de contrôle comporte par exemple une cavité cylindrique communiquant par un premier et un second canal respectivement avec le milieu extérieur du dispositif et avec l'intérieur de la vanne de distribution du côté de la seconde face de son élément mobile, une tige exposée du côté d'une première extrémité à une force calibrée et du côté de l'extrémité opposée, à la pression variable régnant dans l'espace intermédiaire, la tige étant pourvue d'évidements et étant déplaçable dans la cavité cylindrique entre une position où le second canal communique avec l'espace intermédiaire et une position où il communique avec le premier canal.

On vérifie à l'usage que l'élément de contrôle interposé à l'entrée de la vanne de distribution permet d'empêcher tout mouvement des deux équipages mobiles vers la position de réarmement tant que la pression de l'espace intermédiaire n'est pas tombée à une valeur faible où l'on est sûr qu'ils sont bien appliqués l'un contre l'autre et donc de prévenir les mouvements d'écartements intempestifs qui, on l'a vu, peuvent bloquer le fonctionnement du dispositif.

D'autres caractéristiques et avantages apparaitront à la lecture de la description d'un mode préféré de réalisation du dispositif, et en se référant aux dessins annexés sur lesquels :

- la figure 1 représente schématiquement en coupe le dispositif dans sa position d'armement qui est aussi sa position de repos;
- la figure 2 représente une vue en coupe plus détaillée de la partie du piston annulaire contenant le détecteur de butée;
- la figure 3 représente schématiquement la vanne de distribution à tiroir et l'élément de contrôle fixé au-dessus d'elle, pour l'application intermittente au piston secondaire d'un fluide hydraulique, l'élément de contrôle étant dans une position de repos où la pression dans l'espace intermédiaire est tombée au-dessous de la valeur-seuil;
- la figure 4 représente une vue partielle de l'élément de contrôle, montrant la position de la tige intérieure lorsque la pression de l'espace intermédiaire est plus élevée que la valeur-seuil;

- la figure 5 représente une vue en coupe schématique du dispositif à la fin de la phase de déclenchement où le premier équipage mobile est arrivé en fin de sa course aller et où le second équipage mobile est en train de le rejoindre;
- la figure 6 représente une vue en coupe schématique du dispositif à un instant ultérieur où le second équipage mobile a rejoint le premier en fin de course; et
- la figure 7 représente une vue en coupe schématique du dispositif durant la phase de retour des deux équipages mobiles vers leur position de réarmement.

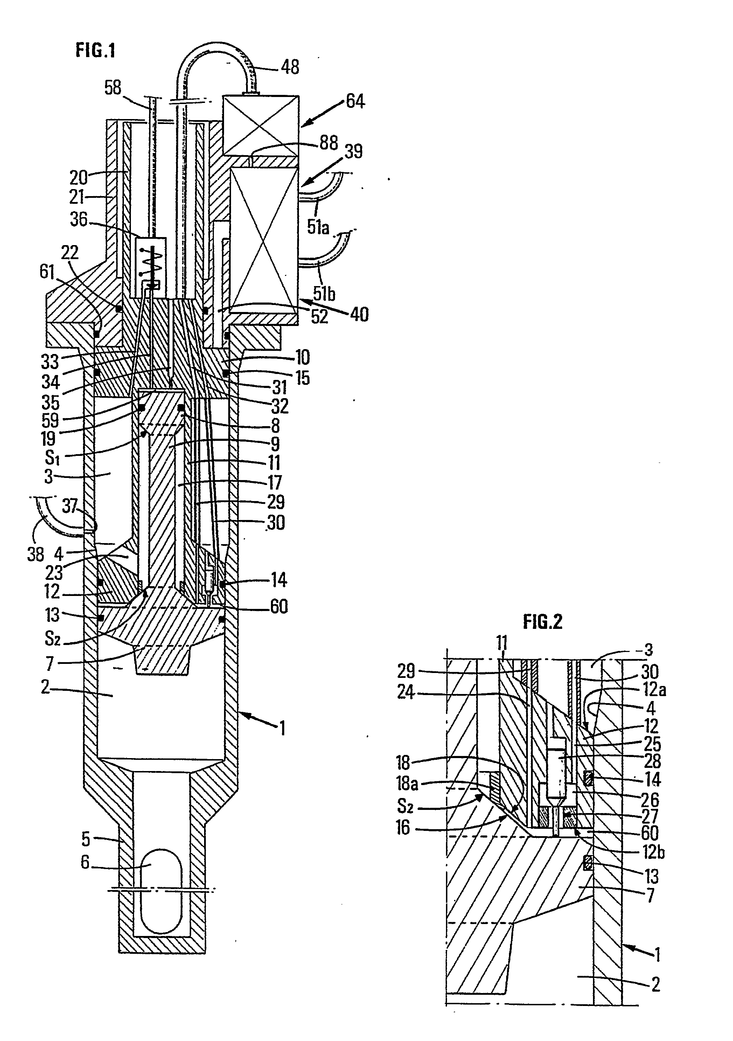

Le dispositif comporte (fig. 1 à 4 plus particulièrement) un corps tubulaire allongé 1 pourvu de deux chambres coaxiales 2, 3 de sections différentes qui se raccordent l'une à l'autre par un épaulement 4. La chambre 2 de moindre section est ouverte du côté opposé à l'épaulement 4 et communique, par une partie terminale resserrée 5 du corps pourvue d'ouvertures 6, avec le milieu extérieur. Il comporte également un premier équipage mobile constitué d'un piston principal 7 et d'un piston auxiliaire 8 fixés aux deux extrémités d'une première tige 9, et un second équipage mobile constitué d'un piston secondaire 10 relié par une seconde tige 11 à un piston annulaire 12. La section du piston principal 7 et celle du piston annulaire 12 sont égales à la section de la chambre 2. Des joints annulaires 13, 14 sont disposés sur leur pourtour de manière à rendre leur coulissement étanche. La section du piston secondaire 10 est adaptée à la section de la chambre 3 du corps. Un joint annulaire 15 est disposé sur son pourtour pour rendre étanche son coulissement dans la chambre 3. Le piston principal 7 se raccorde à la tige 9 par une partie tronconique 16. Un alésage 17 de section adaptée à la section du piston auxiliaire 8, est ménagé dans l'axe de l'élément mobile et de la seconde tige 11. Il est pourvu à son entrée d'une partie chanfreinée 18 de forme adaptée à la partie tronconique 16 du piston principal 7. Un joint 18a est fixé au piston annulaire 12 au voisinage de la partie chanfreinée, pour bien isoler de l'intérieur de la tige 11, l'espace 60 du corps compris entre le piston principal 7 et le piston annulaire 12 lorsqu'ils sont appuyés l'un contre l'autre. La surface S2 du piston principal soumise à l'action de l'air comprimé, lorsque celui-ci est en contact du piston annulaire 12 et du joint 18a, est inférieure à la surface S1 en regard du piston auxiliaire 8. Un joint annulaire 19 est disposé sur le pourtour du piston auxiliaire 8 pour assurer le coulissement étanche de celui-ci. La longueur de la tige 9 est telle que, lorsque la partie tronconique 16 vient en appui sur le chanfrein 18, le piston auxiliaire soit sensiblement au fond de l'alésage central 17.

Le piston secondaire 10 comporte un prolongement tubulaire 20, du côté opposé au piston annulaire 12. Le corps 1 est fermé à son extrémité opposée à la partie resserrée 5, par un couvercle 21. Un joint d'étanchéité annulaire 61 est disposé sur le pourtour du couvercle. Ce couvercle est pourvu d'un alésage central de section adaptée à celle du prolongement tubulaire 20, au moins sur une partie de sa longueur, cette alésage central comportant une rainure périphérique pour un joint d'étanchéïté 22.

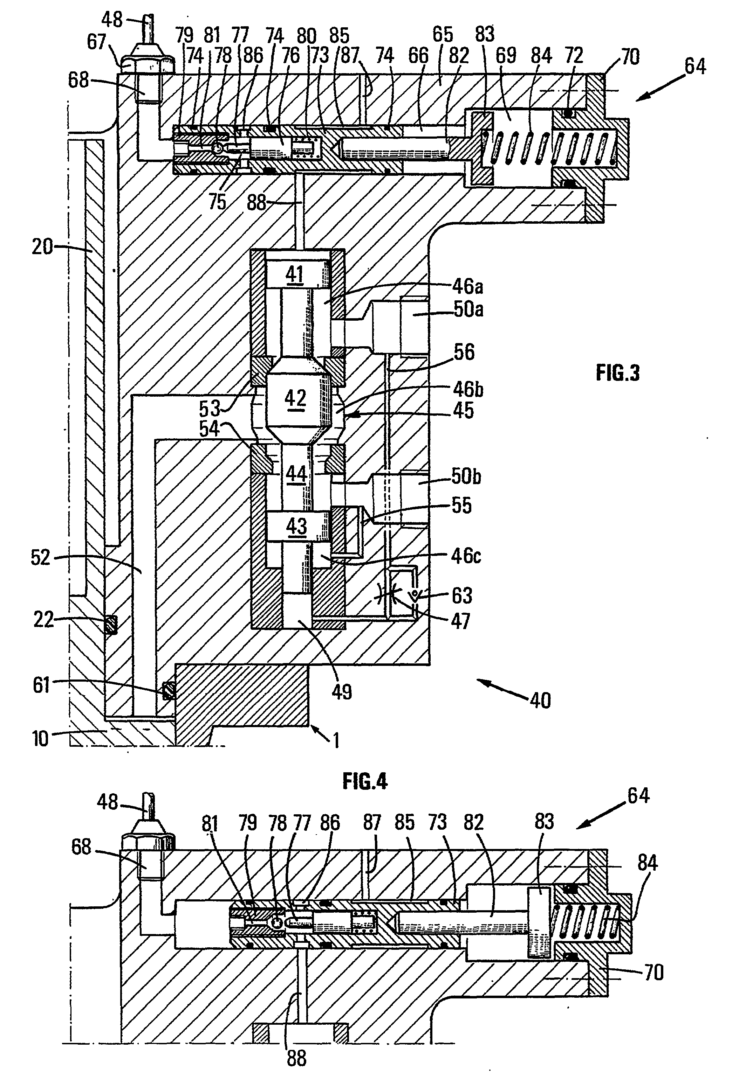

Un ouverture 23 est pratiquée dans le piston annulaire 12 pour faire communiquer en permanence la seconde chambre 3 avec l'alésage central 17 de la seconde tige 11. Deux canaux 24, 25 sont ménagés dans le piston annulaire 12 depuis la face 12a de celui-ci en regard du piston secondaire 10 (Fig. 3). Le canal 24 le traverse de part en part. L'autre, 25, communique avec un évidement intérieur 26 débouchant dans le volume 60, du côté opposé 12b du piston annulaire, par un orifice 27. Dans l'évidement 26 peut coulisser un moyen de contrôle constitué d'une soupape à pointeau 28 agencée pour isoler le canal 25 de l'orifice 27, en position de repos. Le pointeau traverse l'orifice 27 et dépasse à l'extérieur de la face 12b de telle manière que, lorsque le piston annulaire 12 vient en appui contre le piston principal, le pointeau soit poussé et la soupape 28 soulevée, ce qui établit la communication entre le canal 25 et l'espace intermédiaire 60 entre les deux pistons 7 et 12.

Les deux canaux 24 et 25 communiquent, par l'intermédiaire de deux tuyaux 29, 30, respectivement avec deux canaux 31, 32 (fig. 1) traversant de part en part le piston secondaire 10 et débouchant à l'intérieur du prolongement tubulaire 20 de celui-ci. Trois autres canaux 33, 34, 35 traversent également le piston secondaire 10 de part en part. D'un côté, ils débouchent dans le prolongement tubulaire 20 et deux d'entre eux 33, 34 sont raccordés aux deux voies d'une électrovanne à deux voies 36. Du côté opposé, l'un des canaux 33 débouche dans l'espace annulaire entre la seconde tige creuse 11 et la paroi extérieure du corps, et les deux autres 34, 35 débouchent à l'intérieur de cette seconde tige dans une chambre 59 délimitée par le piston secondaire 10 et le piston auxiliaire 8. Le canal 35 est très fin, au moins sur une partie de sa longueur.

Une ouverture 37 est pratiquée dans la paroi latérale du corps 1 au niveau de la seconde chambre 3. Un tuyau 38 connecté à un générateur d'air comprimé (non représenté), est raccordé à cette ouverture 37, de manière à maintenir en permanence une pression élevée (de l'ordre de 140 bars par exemple) dans la partie de la chambre 3 entre le piston secondaire et le piston annulaire 12.

Le couvercle annulaire 21 à l'extrémité du corps 1 comporte une partie 39 (dont le détail est représenté à la figure 3) dans laquelle est disposé un système de commande constitué pour l'essentiel d'une vanne de distribution (ou distributeur) à tiroir et d'un élément de contrôle. Ce distributeur 40 comporte (fig. 3) un tiroir constitué de trois pistons coaxiaux 41, 42, 43 réunis par une même tige 44 et déplaçable dans une cavité 45 à trois chambres communicantes 46a, 46b, 46c. Un alésage 47 est ménagé à travers la paroi du couvercle 21. Il fait communiquer une des chambres latérales 46a, par l'intermédiaire de l'élément de contrôle (représenté à la figure 4, et décrit ci-après) avec un tuyau 48 fixé à l'orifice du canal 31, au fond de l'évidement tubulaire 20. La chambre latérale 46c à l'extrémité opposée de la cavité 45, est prolongée par un évidement tubulaire 49 servant à guider la tige 44, à l'une de ses extrémités. Dans les deux chambres opposées 46a, 46c de la cavité débouchent deux alésages 50a, 50b auxquels se raccordent deux tuyaux 51a, 51b (fig. 1) reliés à un système hydraulique d'un type connu et non représenté, ce qui est adapté à les alimenter en huile respectivement à haute et basse pression (240 bars et 1 bar par exemple).

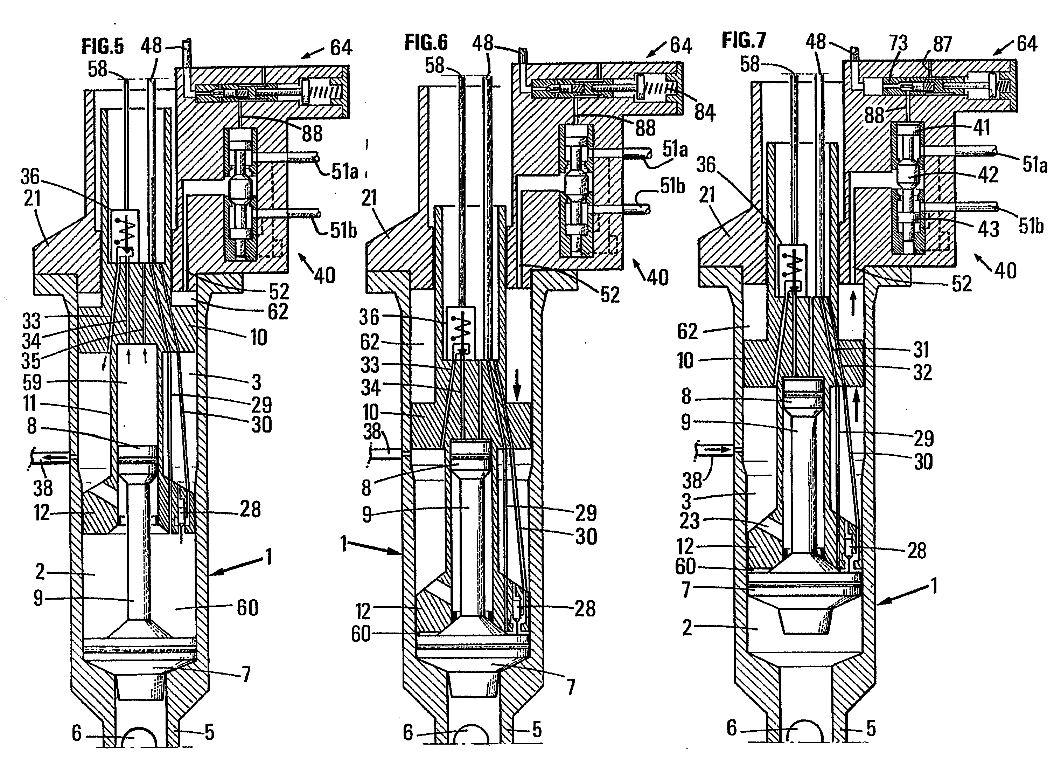

Une voie de communication 52 est établie entre la chambre intermédiaire ou médiane 46c et l'extrémité de la chambre 3 du corps, du côté du piston secondaire 10 opposé au piston annulaire 12 (chambre 62, cf. fig. 5).

Le piston intermédiaire 42 du tiroir comporte deux parties terminales opposées tronconiques. Deux butées 53, 54 sont disposés aux deux extrémités de la chambre médiane 46b. Leur forme est adaptée à celle des parties terminales tronconiques du piston 42, de façon que lorsque celui-ci vient s'appliquer successivement contre la butée 53 (première position du tiroir) et contre la butée 54 (deuxième position du tiroir la chambre médiane 46b soit bien isolée de la chambre 46a ou de la chambre 46c. Le piston 41 coulisse dans la chambre 46a en isolant l'un de l'autre les alésages 47 et 50a, quelle que soit la position du tiroir. Le piston 43 coulisse dans la chambre 46c. Un canal 55 fait communiquer l'alésage 50b avec la chambre 46c entre le piston 43 et l'alésage 49 prolongeant celle-ci. L'épaisseur du piston 43 et l'endroit où débouche le canal 55 sont choisis de façon que, dans la seconde position du tiroir où le piston intermédiaire 42 vient s'appliquer contre la butée 54, le piston 43 vienne obstruer l'entrée du canal 55. Un autre canal 56 fait communiquer l'alésage 50a avec l'évidement tubulaire 49, quelle que soit la position du tiroir dans sa cavité. Un moyen de calibrage 57 d'un type connu est disposé dans le canal 56 pour freiner la circulation de l'huile. Une soupape anti-retour 63 est disposée en dérivation sur le moyen de calibrage 57. L'électro-vanne 36 est commandée depuis une installation de surface au moyen d'un câble conducteur 58.

Un élément de contrôle 64, selon l'invention comporte (fig. 3) une partie cylindrique 65 solidaire du corps de la vanne de distribution 40 ou rapportée sur celui-ci. Cette partie cylindrique est pourvue d'une cavité centrale 66 fermée à une première extrémité par un bouchon fileté 67. Sur un alésage central 68 traversant le bouchon 67 de part en part, on fixe une extrémité de la canalisation 48 reliée à son extrémité opposée avec l'espace intermédiaire 60 (fig. 1). A son extrémité opposée au bouchon fileté 67, la cavité 66 est prolongée par une seconde cavité de section plus grande 69 fermée par un couvercle rapporté 70. Un joint d'étanchéïté 72 disposé dans une rainure du couvercle 70, isole les deux cavités 66, 69 du milieu extérieur au dispositif. Une tige 73 pourvue à sa périphérie de joints d'étanchéïté 74, coulisse de façon étanche dans la cavité centrale 66. La tige 73 comporte sur une partie de sa longueur un alésage 75 ouvert du côté du bouchon 67, où peut coulisser un piston 76. Une pointe 77 vient au contact d'une bille 78 disposée dans une cuvette à l'extrémité d'un embout rapporté 79. Le piston 76 est poussé contre cette bille par un ressort 80. Un canal 81 fait communiquer le fond de la cuvette avec l'alésage central 68.

A la tige 73, du côté opposé à l'embout, est fixée une tige filetée 82 pourvue d'une tête 83. Un ressort 84 est disposé dans la seconde cavité 69 entre la tête 83 et le couvercle 70. En vissant ou en dévissant plus ou moins la tige filetée 82, on tend plus ou moins le ressort 84 et l'on fait varier ainsi la force nécessaire à l'enfoncement de la tige 73 dans la cavité centrale.

Sur une partie de sa longueur, la tige 73 comporte un évidement annulaire 85. Un perçage radial 86 est ménagé dans la tige 73 et débouche dans l'alésage 75 au niveau de la pointe 77. Dans la paroi de l'élément de contrôle 64 sont percés deux canaux 87, 88. Le premier 87, très fin fait communiquer la cavité centrale 66 avec le milieu extérieur. Le second 88 fait communiquer la même cavité centrale avec l'orifice d'entrée 47 de la vanne de distribution 40 par où s'applique la pression variable susceptible de déplacer le tiroir de celle-ci.

La position de l'évidement annulaire 85 et sa longueur sont choisies de manière que les canaux 87, 88 communiquent l'un avec l'autre lorsque le ressort 84 est en position de repos (fig. 3). La position du perçage radial 86 est choisie pour qu'il communique avec le canal 88 en position de compression du ressort 84.

Le dispositif fonctionne de la manière suivante :

La position de repos du dispositif, qui correspond à sa position d'armement est celle représentée à la figure 1. Le second équipage mobile est dans sa position de recul pour laquelle le piston secondaire 10 est sensiblement au contact du couvercle 21 du corps. Le premier équipage mobile est aussi en position de recul. Dans cette position, le piston principal 7 se trouve en appui contre le piston annulaire 12 et la soupape à pointeau 28 est soulevée. Les canaux 24 et 25 communiquent avec l'espace intermédiaire 60, et par conséquent une pression égale à la pression hydrostatique, s'exerce, par le tuyau 48, sur la tige 72 de l'élément de contrôle 64. Le ressort 84 maintient l'élément de contrôle en position de repos (fig. 3) et la chambre 46a du distributeur est en équipression, par les canaux 74, 88 et l'évidement annulaire 85, avec le milieu extérieur. Le tiroir est dans la position représentée à la figure 3 si bien que c'est la basse pression hydraulique du tuyau 51b qui s'exerce par la canalisation 52 sur le piston secondaire 10. Comme il est poussé du côté opposé par l'air comprimé, il est maintenu en position de recul. Le piston principal 7, du fait que la soupape à pointeau est soulevée, est soumis à la pression hydrostatique sur ses deux faces, sauf sur sa partie tronconique en regard de l'alésage central 17 où il est soumis à l'air comprimé. Le piston auxiliaire 8 est soumis à la pression hydrostatique par l'intermédiaire du canal 35 et à l'air comprimé sur sa face opposée. La force globale qui s'exerce sur le premier équipage mobile et qui est la résultante des forces appliquées par l'air comprimé sur les surfaces inégales S1 et S2, a pour action de maintenir le piston principal 7 appliqué contre le joint 18a.

On commande alors l'ouverture de l'électro-vanne de déclenchement 36 par une impulsion électrique ce qui met les canaux 33 et 34 en communication l'un avec l'autre. L'air comprimé est de ce fait admis dans la chambre 59 et s'applique sur la face du piston auxiliaire en regard du couvercle 21.

La nouvelle résultante des forces qui s'exercent sur le premier équipage mobile a pour effet de l'éloigner du second. Le piston principal 7 se décolle de son siège 18 et l'air comprimé peut venir s'appliquer sur la totalité de sa face en regard du piston annulaire 12. Le premier équipage mobile est alors brusquement propulsé vers la partie terminale 5 du corps contre laquelle il vient en butée (fig. 5) et chasse hors des ouvertures 6 le volume d'eau contenu dans la première chambre 2. L'expulsion de l'eau à grande vitesse engendre dans le milieu extérieur des ondes acoustiques puissantes. Dès que le premier équipage mobile s'écarte du second, la soupape à pointeau 28 se referme.

La pression de l'air comprimé dans l'espace intermédiaire 60 entre le piston principal 7 et le piston annulaire 12 (fig. 1) est de l'ordre de 140 bars par exemple. Cette pression appliquée par la canalisation 48, repousse la tige 73 jusque dans la position montrée à la figure 4 où le perçage radial 86 communique avec le canal 88. L'air comprimé pénètre dans la vanne de distribution.

Le rapport des surfaces respectives du piston 41 et de la tige 44 du côté de l'évidement 49, ainsi que le rapport des pressions de l'air et de l'huile comprimés s'exerçant en sens contraire l'une de l'autre sur le tiroir, sont tels que celui-ci se déplace vers sa seconde position (fig. 5) où le piston intermédiaire 42 vient en appui sur le siège 54, ce qui met le canal 52 en communication avec l'alésage 50a où règne une forte pression d'huile.

Cette haute pression appliquée sur la face du piston secondaire 10 en regard du couvercle 21 (chambre 62) étant supérieure à la pression de l'air comprimé appliqué sur sa face opposée, le second équipage mobile est à son tour propulsé vers l'extrémité 5 du corps où il rejoint le premier (fig. 6).

Pendant toute la phase de déplacement des deux équipage mobiles vers l'extrémité 5, la chambre 59 est maintenue en surpression ce qui empêche toute entrée d'eau extérieure.

Lorsque le second équipage mobile rejoint le premier, la valve à pointeau 28 se soulève et la pression de l'espace intermédiaire 60 tombe à une valeur beaucoup plus faible.

Tant que cette pression affaiblie est supérieure à une valeur-seuil de 5 à 10 bars par exemple, elle est appliquée au tiroir de la vanne 40. Si elle décroît en deçà de cette valeur, le ressort 84 repousse la tige 73 vers le bouchon fileté 67 jusqu'à ce que les canaux 87 et 88 soient mis en communication (fig. 3). La pression appliquée à la vanne du côté de la chambre 46a, chute à la valeur de la pression hydrostatique extérieure et le tiroir de la vanne 40 se déplace franchement. Le moyen de calibrage 57 permet de temporiser son déplacement.

La chute de la pression dans la chambre 62 a pour effet que le second équipage mobile est ramené vers la position de recul (fig. 7). La force résultante appliquée au premier équipage mobile lorsque le piston principal 7 est au contact du piston annulaire 12, tendant, ainsi qu'on l'a vu plus haut, à appliquer contre celui-ci le piston principal 10, le premier équipage mobile suit le second dans son mouvement de recul jusqu'à leur position de réarmement représentée à la figure 1. Le dispositif est alors prêt pour un nouveau déclenchement.

L'élément de contrôle, en rendant plus francs les déplacements du tiroir, évite les déclenchements intempestifs qui peuvent se produire tant que les pistons 7 et 12 ne sont pas parfaitement appliqués l'un contre l'autre et que l'espace intermédiaire 60 communique encore plus ou moins avec la chambre 3 où règne la haute pression d'air comprimé. Dans ce cas, en effet, la pression dans ledit espace peut descendre jusqu'à une valeur moyenne faible, de l'ordre de 10 à 20 bars et fluctuer suffisamment pour que le tiroir soumis directement à cette pression, se déplace dans un sens puis dans le sens opposé. La remontée simultanée des deux équipages mobiles peut donc être suivie d'un écartement, le premier équipage mobile repartant spontanément vers le bas.

La chambre 59 est normalement vide d'eau. Lorsqu'un déclenchement est commandé par l'ouverture intermittente de l'électro-vanne 36, l'air comprimé pénètre dans la chambre 59 et empêche toute intrusion d'eau par le canal fin 35. En l'absence d'air comprimé (fourni normalement par l'ouverture de l'électro-vanne), l'écartement spontané des deux équipages mobiles a pour effet d'aspirer de l'eau à l'intérieur.

Si le mouvement de pompage est suffisamment important et répété, il peut se produire alors que l'eau ayant pénétré dans la chambre 59 empêche le premier équipage mobile de reculer complètement pour venir s'appliquer contre le second. La pression dans l'espace intermédiaire demeure trop haute, pour permettre le déplacement du tiroir de la vanne. Le dispositif ne peut plus être réarmé.

L'utilisation de l'élément de contrôle 64 empêchant les déplacements conjoints des deux équipages mobiles vers leur position de réarmement tant qu'ils ne sont pas parfaitement appliqués l'un contre l'autre, régularise le fonctionnement et évite les risques de panne liés aux entrées d'eau.

## Revendications

1. - Dispositif perfectionné pour produire dans l'eau des ondes acoustiques par brusque éjection d'une masse liquide hors d'un corps tubulaire (1) ouvert sur le milieu extérieur à l'une de ses extrémités, cette masse liquide étant propulsée par le coulissement d'un piston principal (7) lequel est relié à un piston auxiliaire (8) pour former un premier équipage mobile, le dispositif comportant un système de manoeuvre du premier équipage constitué d'un second équipage mobile comportant un piston secondaire (10) et un piston annulaire (12) adaptés à coulisser dans le corps et réunis par une tige creuse (11) dans laquelle le piston auxiliaire peut coulisser, le piston annulaire étant pourvu d'une ouverture centrale (17) formant siège pour le piston principal et des moyens pour engendrer des fluides à une première pression et à une seconde pression plus élevée que la première, ces moyens coopérant avec un détecteur de butée (28) actionné par l'application du piston principal contre le piston annulaire, et une vanne de distribution à tiroir (40) dont la partie mobile est déplaçable dans une cavité (46) sous les effets antagonistes d'un fluide à la seconde pression appliqué en permanence et d'une pression variable, laquelle est susceptible de prendre deux valeurs différentes selon la disposition du détecteur de butée, cette vanne de distribution étant adaptée à appliquer par intermittence à une face du piston secondaire, un fluide à la seconde pression, caractérisé en ce qu'il comporte un élément de contrôle (64) calibré pour appliquer à la partie mobile de la vanne de distribution (40), soit ladite pression variable régnant dans l'espace intermédiaire (60) entre le piston principal (7) et le piston annulaire (12) lorsqu'elle est supérieure à une pression-seuil, soit une pression faible, provoquant le déplacement de la partie mobile de ladite vanne.

2. - Dispositif selon la revendication 1, caractérisé en ce que l'élément de contrôle comporte une cavité cylindrique (66, 69) communiquant par un premier et un second canal (87, 88) respectivement avec le milieu extérieur au dispositif et avec l'intérieur de la vanne du distributeur (40) du côté de la seconde face de son élément mobile, une tige (73) exposée du côté d'une première extrémité à une force calibrée et du côté opposé à ladite pression variable, la tige (73) étant pourvue d'évidements (85,86) et étant déplaçable dans la cavité cylindrique entre une position où le second canal (88) communique avec ledit espace intermédiaire (60) et une position où il communique avec le premier canal (85).

3. - Dispositif selon la revendication 2, caractérisé en ce que la tige mobile comporte, du côté de sa seconde extrémité, un alésage central (75) où peut coulisser une soupape anti-retour (76-79).

4. - Dispositif selon la revendication 3, caractérisé en ce qu'il comporte un ressort taré (84) disposé dans la cavité (69) du côté de la première extrémité de la tige (73).

5. - Dispositif selon la revendication 1, caractérisé en ce que les moyens pour engendrer les fluides comportent un générateur d'air comprimé à une première pression et une source de fluide hydraulique à une seconde pression, le générateur d'air comprimé communique en permanence avec la partie (3) du corps situé entre le second piston et le piston annulaire (12) constituant le second équipage mobile, quelle que soit la position de celui-ci et la pression variable appliquée à l'élément de contrôle est celle qui règne dans un circuit (24, 29, 31, 48) mis selon la position du détecteur, à la pression du milieu extérieur au dispositif ou avec celle du générateur d'air comprimé.

6. - Dispositif selon la revendication 5, caractérisé en ce que la cavité (46) de la vanne de distribution (40) comporte trois chambres coaxiales, la chambre intermédiaire (46b) communiquant avec l'une ou l'autre des deux chambres latérales (46a, 46c) selon la position d'un piston central (42) déplaçable dans la chambre intermédiaire, et les deux chambres latérales communiquant respectivement avec le circuit à basse pression et le circuit à haute pression de la source de fluide hydraulique, en ce que les extrémités opposées du tiroir ont des sections inégales, l'extrémité ayant la section la plus grande etant exposée à la pression variable par l'intermédiaire de l'élément de contrôle (64) et l'autre étant exposée à la haute pression hydraulique, et le rapport des sections des deux extrémités opposées étant choisi pour que le tiroir se déplace, lorsque la pression variable est celle de l'air comprimé, vers une position où la chambre intermédiaire (46b) communique avec le circuit à haute pression de la source de fluide hydraulique.

7. - Dispositif selon la revendication 5, caractérisé en ce que l'espace (60) du corps compris entre le piston principal (7) et l'élément mobile (12) est relié à l'élément de contrôle (64) par l'intermédiaire de canaux (24, 31) traversant le piston annulaire et le piston secondaire et des tuyaux (29, 48).

8. - Dispositif selon la revendication 1, caractérisé en ce que l'espace (59) dans la tige creuse (11) compris entre le piston auxiliaire (8) et le piston secondaire (10) communique en permanence avec le milieu extérieur du corps par un canal fin (35) et par intermittence, au moyen d'une vanne (36), avec la partie (3) du corps où règne en permanence la première pression de fluide.

**Patentansprüche**

1. Verbesserte Vorrichtung, um im Wasser akustische Wellen durch plötzliches Ausstossen einer Flüssigkeitsmasse aus einem röhrenförmigen Körper (1) zu erzeugen, der gegen die äussere Umgebung an einem seiner Enden offen ist, wobei diese flüssige Masse durch die Verschiebung eines Hauptkolbens (7) betrieben wird, der mit einem Hilfskolben (8) unter Bildung eines ersten beweglichen Organs verbunden ist, wobei die Vorrichtung ein Betätigungssystem für das erste bewegliche Organ umfaßt, das gebildet wird durch ein zweites bewegliches Organ mit einem Hilfskolben (10) und einem Ringkolben (12), die so ausgelegt sind, daß sie im Körper gleiten und durch eine hohle Stange (11) vereinigt sind, in welcher der Hilfskolben gleiten kann, wobei der Hilfskolben mit einer mittigen Öffnung (17) versehen ist, die einen Sitz für den Hauptkolben bildet und mit Mitteln zur Erzeugung der Fluide bei einem ersten Druck und einem zweiten Druck. der höher als der erste Druck liegt, wobei diese Mittel mit einem Anschlagsdetektor (28) zusammenwirken, der durch Anlage des Hauptkolbens gegen den Hilfskolben gebildet ist und mit einem Verteilerventil mit Schieber (40), dessen beweglicher Teil in einem Hohlraum (46) unter den Gegenkräften eines Fluids beim zweiten dauernd anliegenden Druck und einem variablen Druck verschiebbar ist, der in der Lage ist, zwei unterschiedliche Werte entsprechend der Anordnung des Anschlagsdetektors einzunehmen, wobei dieses Verteilerventil so ausgelegt ist, daß es intermittierend an eine Fläche des Sekundärkolbens ein Fluid beim zweiten Druck drückt, dadurch gekennzeichnet, daß sie ein kalibriertes Regelelement (64) umfaßt, um an dem beweglichen Teil des Verteilerventils (40) entweder den variablen im Zwischenraum (60) zwischen dem Hauptkolben (7) und dem Ringkolben (12) herrschenden Druck, wenn er höher als ein Druckschwellenwert ist, oder einen niedrigen Druck zu legen, der die Verschiebung des beweglichen Teils dieses Ventils hervorruft.

2. Vorrichtung nach Anspruch 1, dadurch gekennzeichnet, daß das Regelelement einen zylindrischen Hohlraum (66, 69) umfaßt, der über einen ersten und einen zweiten Kanal (87, 88) jeweils mit der Umgebung ausserhalb der Vorrichtung und mit dem Inneren des Verteilerventils (40) auf der Seite der zweiten Fläche seines beweglichen Elementes in Verbindung steht, einer auf der Seite eines ersten Endes einer kalibrierten Kraft und auf der gegenüberliegenden Seite einem variablen Druck ausgesetzten Stange (73), wobei die Stange (73) mit Ausnehmungen (85, 86) versehen und im zylindrischen Hohlraum zwischen einer Position verschiebbar ist, wo der zweite Kanal (88) mit diesem Zwischenraum (60) in Verbindung steht und einer Position, wo er mit dem ersten Kanal (85) in Verbindung steht.

3. Vorrichtung nach Anspruch 2, dadurch gekennzeichnet, daß die bewegliche Stange auf der Seite ihres zweiten Endes eine mittige Bohrung (75) umfaßt, wo ein Rückschlagventil (76-79) gleiten kann.

4. Vorrichtung nach Anspruch 3, dadurch gekennzeichnet, daß sie eine tarierte Feder (84) umfaßt, die im Hohlraum (69) auf der Seite des ersten Endes der Stange (73) angeordnet ist.

5. Vorrichten nach Anspruch 1, dadurch gekennzeichnet, daß die Mittel zur Erzeugung der Fluide einen Druckluftgenerator für einen ersten Druck und eine Quelle hydraulischen Fluids für einen zweiten Druck umfassen, wobei der Druckluftgenerator dauernd mit dem Teil (3) des Körpers in Verbindung steht, der zwischen dem zweiten Kolben und dem das zweite bewegliche Organ bildenden Ringkolben sich unabhängig von dessen Position befindet und daß der an das Regelelement gelegte variable Druck derjenige ist, der in einem Kreis (24, 29, 31, 48) herrscht, der entsprechend der Position des Detektors auf den Druck des Mediums ausserhalb der Vorrichtung gebracht oder mit dem des Druckluftgenerators in Verbindung gesetzt wird.

6. Vorrichtung nach Anspruch 5, dadurch gekennzeichnet, daß der Hohlraum (46) des Verteilerventils (40) drei koaxiale Kammern umfaßt, wobei die Zwischenkammer (46b) mit der einen oder anderen der zwei Seitenkammern (46a. 46c) entsprechend der Position eines Hauptkolbens (42), der in der Zwischenkammer verschiebbar ist, in Verbindung steht und die beiden Seitenkammern jeweils mit dem Niederdruckkreis und dem Hochdruckkreis der Quelle für hydraulisches Fluid in Verbindung stehen, daß die sich gegenüberstehenden Enden des Schiebers ungleiche Querschnitte haben, wobei das Ende mit dem grösseren Querschnitt dem variablen Druck vermittels des Regelelementes (64) ausgesetzt ist und das andere dem hohen hydraulischen Druck ausgesetzt ist und das Verhältnis der Querschnitte der beiden einander gegenüberliegenden Enden derart gewählt ist, daß der Schieber sich, wenn der variable Druck derjenige der komprimierten Luft ist, sich gegen eine Position verschiebt, wo die Zwischenkammer (46b) mit dem Hochdruckkreis der Quelle für hydraulisches Fluid in Verbindung steht.

7. Vorrichtung nach Anspruch 5, dadurch gekennzeichnet, daß der Raum (60) des Körpers zwischen dem Hauptkolben (7) und dem beweglichen Element (12) mit dem Regelelement (64) vermittels von Kanälen (24, 31), die den Ringkolben und den Sekundärkolben durchsetzen sowie Rohren (29, 48) verbunden ist.

8. Vorrichtung nach Anspruch 1, dadurch gekennzeichnet. daß der Raum (59) in der hohlen Stange (11) zwischen dem Hilfskolben (8) und dem Sekundärkolben (10) dauernd mit der Umgebung ausserhalb des Körpers über einen engen Kanal (35) und intermittierend vermittels eines Ventils (36) mit dem Teil (3) des Körpers in Verbindung gesetzt wird, wo dauernd der erste Fluiddruck herrscht.

## Claims

1. An improved device for producing sound waves in water by the sudden ejection of a liquid mass from a tubular body (1) open to the external environment at one of its ends, this liquid mass being propelled by the sliding of a main piston (7) which is connected to an auxiliary piston (8) so as to form a first mobile assembly, the device comprising a system for operating the first assembly consisting of a second mobile assembly comprising a secondary piston (10) and an annular piston (12) suitable for sliding in the body and connected together by a hollow rod (11) in which the auxiliary piston can slide, the annular piston being provided with a central opening (17) forming a seat for the main piston and means for generating fluids at a first pressure and at a second pressure higher than the first, these means interacting with a stop detector (28) actuated by the application of the main piston against the annular piston, and a distribution slide valve (40) whose mobile part is movable in a cavity (46) under the opposing effects of a fluid permanently applied at the second pressure and of a variable pressure, which is capable of taking on two different values depending on the disposition of the stop detector, this distribution valve being suitable for applying intermittently, to one face of the secondary piston, a fluid at the second pressure, characterised in that it comprises a calibrated control element (64) for applying, to the mobile part of the distribution valve (40), either the said variable pressure prevailing in the intermediate space (60) between the main piston (7) and the annular piston (12) when it is greater than a threshold pressure, or a low pressure, causing the movement of the mobile part of the said valve.

2. A device according to claim 1, characterised in that the control element comprises a cylindrical cavity (66, 69) communicating through a first and second channel (87, 88) respectively with the environment external to the device and with the inside of the distributor valve (40) on the same side as the second face of its mobile part, a rod (73) exposed at a first end to a calibrated force and at the opposite end to the said variable pressure, the said rod (73) being provided with recesses (85, 86) and being movable in the cylindrical cavity between a position in which the second channel (88) communicates with the said intermediate space (60) and a position in which it communicates with the first channel (85).

3. A device according to claim 2, characterised in that the mobile rod comprises, at its second end, a central bore (75) in which a non-return valve (76-79) can slide.

4. A device according to claim 3, characterised in that it comprises a calibrated spring (84) disposed in the cavity (69) on the same side as the first end of the rod (73).

5. A device according to claim 1, characterised in that the means for generating the fluids comprise a generator of compressed air at a first pressure and a source of hydraulic fluid at a second pressure, the compressed air generator communicates permanently with the part (3) of the body situated between the second piston and the annular piston (12) forming the second mobile assembly, whatever the position of the latter, and the variable pressure applied to the control element is that which prevails in a circuit (24, 29, 31, 48) put, depending on the position of the detector, at the pressure of the environment external to the device or at that of the compressed air generator.

6. A device according to claim 5, characterised in that the cavity (46) of the distribution valve (40) comprises three coaxial chambers, the intermediate chamber (46b) communicating with one or other of the two lateral chambers (46a, 46c) depending on the position of a central piston (42) movable in the intermediate chamber, and the two lateral chambers communicating respectively with the low pressure circuit and the high pressure circuit of the source of hydraulic fluid, and in that the opposite ends of the slide have unequal sections, the end with the largest section being exposed to the variable pressure through the control element (64) and the other being exposed to the high hydraulic pressure, and the ratio of the sections of the two opposite ends being chosen so that the slide moves, when the variable pressure is that of the compressed air, to a position in which the intermediate chamber (46b) communicates with the high pressure circuit of the source of hydraulic fluid.

7. A device according to claim 5, characterised in that the space (60) of the body between the main piston (7) and the mobile element (12) is connected to the control element (64) through channels (24, 31) passing through the annular piston and the secondary piston and through pipes (29, 48).

8. A device according to claim 1, characterised in that the space (59) in the hollow rod (11) between the auxiliary piston (8) and the secondary piston (10) communicates permanently with the environment outside the body through a narrow channel and intermittently, by means of a valve (36), with the part (3) of the body in which the first fluid pressure prevails permanently.

**FIG.1**

**FIG.2**

FIG.3

FIG.4

FIG.5 FIG.6 FIG.7